Europäisches Patentamt

European Patent Office

Office européen des brevets

(11) Numéro de publication : **0 080 961**
**B1**

(12) **FASCICULE DE BREVET EUROPÉEN**

(45) Date de publication du fascicule du brevet :
05.06.85

(51) Int. Cl.⁴ : **A 01 G   9/22**

(21) Numéro de dépôt : **82430036.2**

(22) Date de dépôt : **25.11.82**

(54) Ecran thermique et son application à une serre de culture.

(30) Priorité : **27.11.81 FR 8122463**

(43) Date de publication de la demande :
**08.06.83 Bulletin 83/23**

(45) Mention de la délivrance du brevet :
**05.06.85 Bulletin 85/23**

(84) Etats contractants désignés :
**AT BE CH DE FR GB IT LI LU NL SE**

(56) Documents cités :
**EP-A- 0 026 710**
**FR-A- 2 088 360**
**FR-A- 2 442 006**
**US-A- 3 118 781**
**US-A- 3 276 943**

(73) Titulaire : **Dalle, Yves**
**Trémollier Les Granettes**
**F-13100 Aix-en-Provence (FR)**

(72) Inventeur : **Dalle, Yves**
**Trémollier Les Granettes**
**F-13100 Aix-en-Provence (FR)**

(74) Mandataire : **Moretti, René et al**
**C/O Cabinet BEAU DE LOMENIE 14, rue Raphaël**
**F-13008 Marseille (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un écran thermique et son application à une serre de culture.

Le secteur technique de l'invention est celui des dispositifs pour réfléchir les radiations émises par une source chaude et plus particulièrement des écrans utilisés dans le cadre du réchauffage des plantes cultivées sous serre.

Dans cette application, un tel écran est disposé au-dessous de la toiture de la serre.

On connaît déjà des écrans trouvant leur application en agriculture pour filtrer le rayonnement solaire.

Le brevet US-A-3 118 781 concerne un écran feuilleté et son procédé de fabrication, lequel écran se compose d'un film-support en matière plastique souple comportant une face réfléchissante et un film protecteur solidaire du film-support laissant passer les rayons infrarouges ayant une longueur d'onde entre 0,8 et 2 microns.

Le brevet EP-A-0 026 710 a pour objet un produit filtrant des rayons infrarouges solaires et ses applications notamment à la culture sous serre. Il s'agit d'un produit en feuilles, plaques ou bandes souples et/ou rigides destiné à la filtration des rayons infrarouges. Dans un mode de réalisation, le film est percé de trous qui le traversent de part en part.

Le brevet FR-A-2 088 360 concerne une feuille composite arrêtant les rayons thermiques, composée d'un film-support en matière plastique souple, d'une couche d'aluminium, d'un premier film transparent et d'un second film transparent pour empêcher sélectivement la transmission des rayons thermiques de la lumière solaire.

Le brevet FR-A-2 442 006 est relatif à un écran de climatisation destiné notamment à l'agriculture et comportant un film adhésivé et laminé à un support synthétique enduit de part et d'autre de sa surface de deux autres films, par exemple en polychlorure de vinyle.

Un objectif de l'invention consiste à réfléchir les radiations sur le feuillage des plantes réparties au niveau du sol.

Un autre objectif de l'invention est d'isoler la partie couverte dans laquelle se trouvent les plantes, contre le rayonnement extérieur.

Un autre objectif de l'invention consiste en ce que ledit écran permette l'écoulement des eaux de condensation ou des eaux de pluies en cas de fuite accidentelle et leur répartition sur les plantes ou leur évacuation.

Ces objectifs sont atteints par l'écran thermique selon l'invention, comportant au moins un film-support en matière plastique souple, dont une face est réfléchissante, laquelle est recouverte d'un premier film transparent ne laissant passer que les rayons infrarouges d'une longueur d'onde d'au moins deux microns, lequel premier film est solidaire du film-support, l'ensemble desdits films comportant des perforations le traversant de part en part, caractérisé en ce qu'il se compose d'un deuxième film de matière plastique souple transparent ne laissant passer que les rayons infrarouges d'une longueur d'onde d'au moins deux microns, lequel deuxième film est situé devant ladite face réfléchissante du film support, est indépendant de celui-ci et est perforé et en ce que les trous de l'ensemble formé par le film-support et le premier film et ceux du deuxième film transparent sont décalés les uns par rapport aux autres afin d'éviter les phénomènes d'échange par convection.

Ces objectifs sont également atteints par l'écran thermique comportant au moins un premier film-support en matière plastique souple dont une face est réfléchissante, laquelle face est recouverte d'un film transparent ne laissant passer que les rayons infrarouges d'une longueur d'onde d'au moins 2 microns, lequel film transparent est solidaire du premier film-support, l'ensemble desdits films comportant des perforations le traversant de part en part, caractérisé en ce qu'il se compose d'un deuxième film-support en matière plastique souple dont une face est réfléchissante et est recouverte d'un film transparent ne laissant passer que les rayons infrarouges d'une longueur d'onde d'au moins 2 microns, lequel film transparent est solidaire du deuxième film-support, lequel deuxième film-support est superposé audit premier film-support de telle sorte que les faces réfléchissantes des deux films-supports sont en opposition et orientées vers l'extérieur de l'écran, en ce que l'ensemble composé du deuxième film-support et du film transparent comporte des perforations le traversant de part en part et en ce que les trous du premier film-support et ceux du deuxième film-support sont décalés les uns par rapport aux autres afin d'éviter les phénomènes d'échange par convection.

Dans un mode de réalisation, ladite face réfléchissante est métallisée et enduite d'un vernis transparent laissant passer les rayons infrarouges supérieurs à 2 microns.

Les perforations sont au nombre de deux à trois au mètre carré.

Lesdites perforations sont de préférence d'un diamètre de dix millimètres.

Une application d'un écran selon l'invention comportant un seul film-support réfléchissant à une serre dans laquelle on cultive des plantes consiste en ce que la face réfléchissante du film-support et le deuxième film de matière plastique souple transparent sont situés du côté des plantes pour réfléchir sur celles-ci les rayons infrarouges émis par une source chaude.

Une application d'un écran selon l'invention comportant deux films-supports réfléchissants superposés et disposés en opposition, à une serre dans laquelle on cultive des plantes, consiste en ce que la face réfléchissante du premier film-support est située du côté des plantes pour réfléchir sur celles-ci les rayons infrarouges, émis par une source chaude, et la face réfléchissante du deuxième film-support est située du côté de la structure de la serre pour réfléchir à l'extérieur de la partie couverte par l'écran, le rayonnement provenant de l'extérieur.

Le résultat de l'invention est un écran thermique composé de plusieurs films de matière plastique souple et adapté pour filtrer les rayons infrarouges et laisser passer jusqu'à la face réfléchissante les rayons ayant une longueur d'onde supérieure à deux microns qui ont une action bénéfique sur le développement des plantes, lesquels rayons sont réfléchis sur le feuillage de celles-ci.

Dans le mode de réalisation selon lequel l'écran est composé de deux films-supports superposés et mis en opposition, on obtient d'une part le rayonnement infrarouge émis par une source chaude sur le feuillage des plantes et d'autre part l'isolation contre la chaleur extérieure de la partie couverte dans laquelle les plantes sont cultivées en réfléchissant à l'extérieur le rayonnement provenant de l'extérieur, par exemple le rayonnement solaire.

La présence des trous qui traversent de part en part les films, lesquels trous d'un des films sont décalés par rapport à ceux de l'autre, permettent l'écoulement des eaux de condensation ou provenant d'une fuite accidentelle, lesquelles eaux, passant par les trous réservés dans le film situé au-dessus de l'autre, s'insinuent entre celui-ci et l'autre film pour s'écouler par les trous pratiqués dans ce dernier.

Le fait que les trous sont décalés a pour effet de pallier aux phénomènes d'échange par convection qui sont à éviter pour optimiser le rendement de la serre.

La souplesse de l'écran permet de l'adapter aisément aux abris dans lesquels il doit être installé et également de faciliter son entreposage ou son transport du fait qu'il offre la possibilité de se présenter sous la forme de rouleaux.

D'autres avantages ressortiront encore de la description suivante d'une forme de réalisation d'un écran selon l'invention en référence au dessin annexé sur lequel :

la figure 1   est une vue en perspective schématique d'une partie d'un écran selon l'invention ;

la figure 2   est une vue en coupe partielle à plus grande échelle de l'écran de la figure 1 ;

la figure 3   est une vue en coupe partielle à plus grande échelle d'un écran selon la figure 1 composé de deux films supports dont les faces réfléchissantes sont en opposition et orientées vers l'extérieur de l'écran.

Dans un mode de réalisation, un écran thermique selon l'invention se compose d'un film opaque de matière plastique souple 1, lequel constitue un support, par exemple une feuille mince de polyester dont une des faces 1a est réfléchissante. Le revêtement de cette face est par exemple réalisé selon un procédé connu, par métallisation sous vide.

La protection de la face métallisée est réalisée selon un mode d'exécution en y appliquant et en solidarisant au film support 1, un film transparent protecteur 2, de telle sorte que les deux films 1 + 2 ne forment qu'une seule feuille. Le film transparent 2 est, par exemple, en polyéthylène ou en un matériau analogue présentant les mêmes caractéristiques de transparence dans l'infrarouge long.

Selon un mode de réalisation, la face réfléchissante est enduite de vernis 2 du genre polyester ou similaire qui forme un film protecteur.

Le film ou le vernis 2 sont choisis dans la gamme de ceux qui filtrent les rayons infrarouges 3 en ne laissant passer, jusqu'à la face métallisée 1a, que les rayons ayant une longueur d'onde supérieure à deux microns, de manière à réfléchir sur le feuillage des plantes lesdits rayons, lesquels ont un effet favorable sur le développement des plantes cultivées.

La face métallisée 1a est donc orientée du côté de la source chaude émettrice du rayonnement infrarouge et corrélativement du côté des cultures.

Dans une serre, ledit écran est installé au-dessous de la toiture, la face réfléchissante 1a étant située à la partie inférieure de l'écran, pour réfléchir les rayons infrarouges sur le feuillage des plantes.

Pour permettre l'écoulement des eaux provenant des fuites accidentelles ou des eaux de condensation qui sont susceptibles de se former sur la face 1b opposée à celle réfléchissante 1a, qui est frappée par les rayons infrarouges et également qui est mise au contact des courants convecteurs émis par la source chaude, le film composite 1 + 2 comporte des perforations 4 qui le traversent de part en part. Ces trous 4 ont par exemple un diamètre de 10 mm et sont répartis à raison de deux à trois trous par mètre carré de surface de l'écran.

Dans le but d'éviter les phénomènes d'échange par convection, l'écran selon l'invention comporte un deuxième film 5 indépendant du film complexe 1 + 2 et disposé immédiatement au-dessous de la face réfléchissante 1a, protégée par le film 2.

Ce film 5 est réalisé en matière plastique souple et est, comme le film protecteur 2, par exemple en polyester, polyéthylène ou autre matériau laissant passer les rayons infrarouges ayant une longueur d'onde supérieure à deux microns.

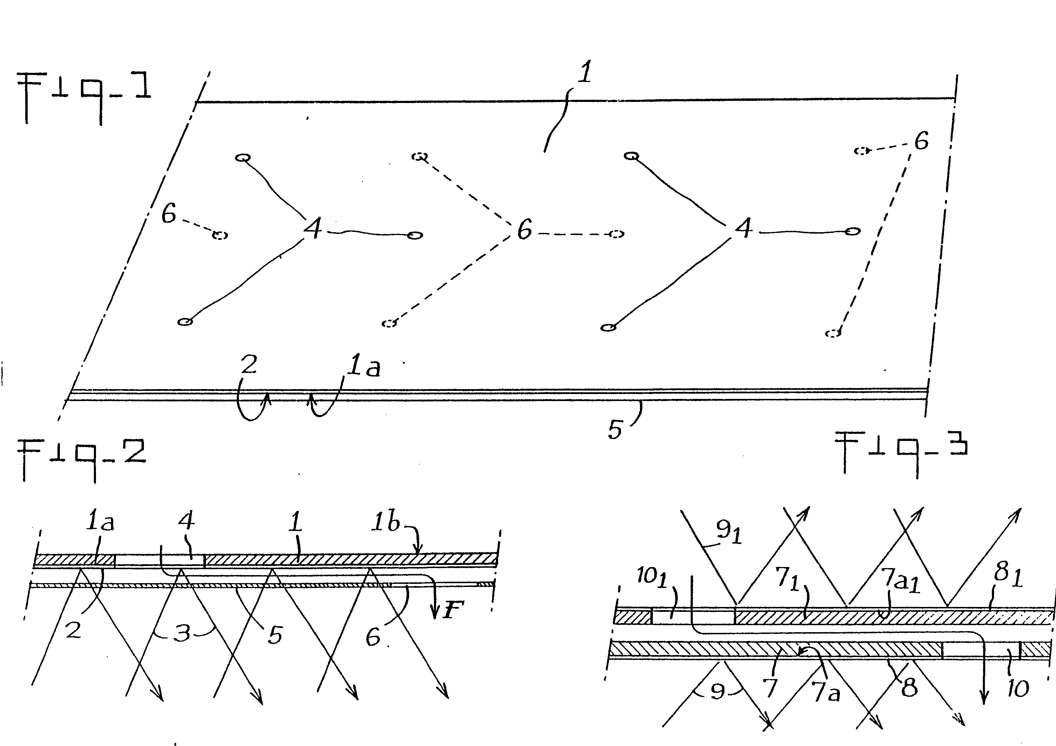

Afin de permettre l'écoulement des eaux traversant le complexe 1 + 2 et qui s'insinuent, comme l'illustre la flèche F de la figure 2, entre ledit complexe et le film transparent 5, celui-ci comporte des trous 6 le traversant de part en part. Ces trous sont par exemple identiques à ceux du complexe 1 + 2 et comme celui-ci sont répartis sur sa surface à raison de deux à trois trous 6 au mètre carré.

Pour pallier à tout échange par convection, les trous 4 du complexe 1 + 2 sont décalés par rapport aux trous 6 du film transparent 5 tel que l'illustre la figure 1.

La figure 3 illustre un autre mode de réalisation d'un écran selon l'invention, lequel se compose d'un premier film support opaque en matière plastique 7, par exemple une feuille mince de polyester dont une face 7a est réfléchissante.

Comme l'écran décrit en regard de la figure 1, le revêtement de la face 7a est par exemple réalisé par métallisation sous vide. La protection de la face métallisée est obtenue en y appliquant et en solidarisant au film support 7, un film protecteur transparent 8, de telle sorte que les deux films 7 + 8 constituent une seule feuille. Le film transparent 8 est par exemple en polyéthylène ou en un matériau analogue présentant les mêmes caractéristiques de transparence dans l'infrarouge long.

Par exemple, la face réfléchissante 7a est enduite d'un vernis 8, du genre polyester ou similaire et qui forme un film protecteur.

Le film ou le vernis 8 sont choisis dans la gamme de ceux qui filtrent les rayons infrarouges 9 en ne laissant passer jusqu'à la face métallisée 7a que les rayons ayant une longueur d'ondes supérieure à deux microns, de manière à réfléchir sur le feuillage des plantes lesdits rayons.

La face métallisée 7a est ainsi orientée du côté de la source chaude émettrice du rayonnement infrarouge et constitue la face interne de l'enceinte totalement ou partiellement couverte par l'écran et sous laquelle les plantes sont cultivées.

Comme le film 1 + 2 précédemment décrit, le film 7 + 8 comporte des trous circulaires 10 pour permettre l'écoulement des eaux provenant des fuites accidentelles ou des eaux de condensation se produisant au-dessus de l'écran.

L'écran comporte en outre un deuxième film support $7_1$ en tous points identique au film support 7 qui vient d'être décrit. Ce deuxième film support $7_1$ est superposé au film support 7 de telle sorte que sa face réfléchissante métallisée $7a_1$ est en opposition de la face métallisée 7a. Ainsi les faces 7a et $7a_1$ forment les faces extérieures de l'écran.

Les trous $10_1$ du complexe $7_1/8_1$ sont décalés par rapport aux trous 10 du complexe 7/8, tel qu'illustré aux figures 1 et 3 du dessin pour permettre l'écoulement des eaux à travers l'écran et provenant de l'extérieur de l'enceinte couverte dans laquelle les plantes sont cultivées.

La face métallisée $7a_1$ du deuxième film support est ainsi située du côté de la structure de la serre donc vers l'extérieur de celle-ci et les rayons $9_1$, qui traversent la couverture de la serre et qui frappent l'écran, sont réfléchis vers l'extérieur de ladite face métallisée, ce qui contribue à assurer une bonne isolation thermique de la partie couverte sous laquelle sont élevées les plantes.

### Revendications

1. Ecran thermique comportant au moins un film-support (1) en matière plastique souple dont une face (1a) est réfléchissante, laquelle face est recouverte d'un premier film (2) transparent ne laissant passer que les rayons infrarouges d'une longueur d'onde d'au moins deux microns, lequel premier film (2) est solidaire du film-support (1), l'ensemble formé par le film-support (1) et le premier film (2) comportant des perforations (4) le traversant de part en part, caractérisé en ce qu'il se compose d'un deuxième film de matière plastique souple transparent (5) ne laissant passer que les rayons infrarouges d'une longueur d'onde d'au moins deux microns, lequel deuxième film (5) est situé devant ladite face réfléchissante (1a) du film-support (1), est indépendant de celui-ci et est perforé et en ce que les trous (4) de l'ensemble formé par le film-support (1) et le premier film (2) d'une part et ceux du deuxième film transparent (5) d'autre part sont décalés les uns par rapport aux autres afin d'éviter les phénomènes d'échange par convection.

2. Ecran thermique comportant au moins un premier film-support (7) en matière plastique souple dont une face (7a) est réfléchissante, laquelle face est recouverte d'un film (8) transparent ne laissant passer que les rayons infrarouges d'une longueur d'onde d'au moins deux microns, lequel film transparent (8) est solidaire du premier film-support (7), l'ensemble desdits films (7/8) comportant des perforations (10) le traversant de part en part, caractérisé en ce qu'il se comporte d'un deuxième film-support en matière plastique souple ($7_1$) dont une face ($7a_1$) est réfléchissante et est recouverte d'un film transparent ($8_1$) ne laissant passer que les rayons infrarouges d'une longueur d'onde d'au moins deux microns, lequel film transparent ($8_1$) est solidaire du deuxième film-support ($7_1$), en ce que lequel deuxième film-support ($7_1$) est superposé audit premier film-support (7) de telle sorte que les faces réfléchissantes ($7a/7a_1$) des deux films-supports sont en opposition et orientées vers l'extérieur de l'écran, en ce que l'ensemble des films ($7_1/8_1$) comprenant le deuxième film-support comporte des perforations ($10_1$) le traversant de part en part et en ce que les trous (10) du premier film-support (7) et ceux ($10_1$) du deuxième film-support ($7_1$) sont décalés les uns par rapport aux autres afin d'éviter les phénomènes d'échange par convection.

3. Ecran selon l'une quelconque des revendications 1 ou 2, caractérisé en ce que la face réfléchissante (1a/7a) est métallisée.

4. Ecran selon la revendication 3, caractérisé en ce que ladite face réfléchissante (1a/7a) est enduite d'un vernis transparent (2/8) pour former un film de protection.

5. Ecran selon la revendication 1, caractérisé en ce que l'ensemble formé par le film-support et le premier film transparent ainsi que le deuxième film transparent (5) comportent chacun au moins deux perforations (4/6) au mètre carré, de préférence trois.

6. Ecran selon la revendication 2, caractérisé en ce que les ensembles de films (7/8) et ($7_1/8_1$) composés des films-supports et des films transparents comportent chacun au moins deux perforations ($10/10_1$) au mètre carré, de préférence trois.

7. Ecran selon l'une quelconque des revendications 5 ou 6, caractérisé en ce que les perforations (4/6/10/10₁) sont circulaires et d'un diamètre de dix millimètres.

8. Application d'un écran selon l'une quelconque des revendications 1 et 3 à 5 et 7 à une serre dans laquelle on cultive des plantes, caractérisée en ce que la face réfléchissante (1a) du film-support (1) et le deuxième film de matière plastique transparent (5) sont situés du côté des plantes pour réfléchir sur celles-ci les rayons infrarouges émis par une source chaude.

9. Application d'un écran selon l'une quelconque des revendications 2 et 3, 4 et 6, 7 à une serre dans laquelle on cultive des plantes, caractérisée en ce que la face réfléchissante (7a) du premier film-support (7) est située du côté des plantes pour réfléchir sur celles-ci les rayons infrarouges émis par une source chaude et la face réfléchissante (7a₁) du deuxième film-support (7₁) est située du côté de la structure de la serre pour réfléchir à l'extérieur de la partie couverte par l'écran, le rayonnement provenant de l'extérieur.

## Claims

1. Heat screen comprising at least a support film (1) in supple plastic material of which one face (1a) is reflective, said face is covered with a first transparent film (2) letting only the infra red rays with a wavelength of at least two microns go through, said first film (2) is integral with the support-film (1), the assembly constituted by the support-film (1) and said first film (2) comprising perforations (4) traversing said assembly through and through, characterized in that it comprises a second film of supple transparent plastic material (5) letting only infra red rays with a wavelength of at least two microns go through, said second film (5) is situated in front of said reflecting face (1a) of the support-film (1), is independent thereof and is perforated, and in that the holes of the assembly (4) constituted by the support film (1) and said first film on the one hand, and those of the second transparent film (5) on the other hand are offset one with respect to the other in order to avoid the phenomena of exchange by convection.

2. Heat screen comprising at least a first support-film (7) in supple plastic material of which one face (7a) is reflective, said face being covered with a transparent film (8) only letting the infra red rays with a wavelength of at least two microns go through, said transparent film (2) is integral with the first support-film (7) the assembly of said films (7/8) comprising perforations (10) traversing the latter through and through, characterized in that it comprises a second film-support in supple plastic material (7₁) of which one face (7a₁) is reflective and is covered with a transparent film (8₁) letting only infra red rays with a wavelength of at least two microns go through, said transparent film (8₁) is integral with the second support-film (7₁) and in that said second support-film (7₁) is superposed on said first support-film (7) so that the reflective face (7a/7a₁) of the two support-films are opposite and oriented outwardly of the screen, in that the assembly of the films (7₁/8₁) comprising the second support-film comprises perforations (10₁) traversing the latter through and through, and in that the holes (10) of the first support-film (7) and those (10₁) of the second support-film (7₁) are offset one with respect to the other in order to avoid the phenomena of exchange by convection.

3. Screen according to anyone of claims 1 or 2, characterized in that the reflective face (1a/7a) is covered with metal.

4. Screen according to claim 3, characterized in that said reflective face (1a/7a) is coated with a transparent varnish (2/8) to form a protective film.

5. Screen according to claim 1, characterized in that the assembly constituted by the support-film and the first transparent film as well as the second transparent film (5) each comprise at least two perforations (4/6) par square meter, and preferably three.

6. Screen according to claim 2, characterized in that the assemblies of films (7/8) and (7₁/8₁) constituted by support-films and transparent films each comprise at least two perforations (10/10₁) per square meter, and preferably three.

7. Screen according to anyone of claims 5 or 6, characterized in that the perforations (4/6/10/10₁) are circular and have a diameter of ten millimeters.

8. Application of a screen according to anyone of claims 1 and 3 to 5 and 7 to a greenhouse in which plants are cultivated, characterized in that the reflective face (1a) of the support-film (1) and the second film of transparent plastic material (5) are situated on the plants side to reflect on said plants the infra red rays issued from a hot source.

9. Application of a screen according to anyone of claims 2 and 3, 4 and 6, 7 to a green house in which plants are cultivated, characterized in that the reflective face (7a) of the first film-support (7) is situated on the plants side to reflect thereon the infra red rays issued from a hot source and the reflective face (7a) of the second support-film (7₁) is situated on the greenhouse structure side to reflect out of the part covered by the screen, the radiation issuing from the outside.

## Patentansprüche

1. Wärmeschild mit mindestens einen Filmträger (1) aus nachgiebigem Plastikmaterial, dessen eine Seite (1a) reflektierend ist, welche Seite mit einem ersten transparenten, nur Infrarotstrahlen mit einer Wellenlänge von mindestens 2 μm durchlassenden Film (2) bedeckt ist, welcher erste Film (2) mit dem Filmträger (1) verbunden ist, wobei die Gesamtheit aus Filmträger (1) und erstem Film (2) ganz durch sie durchgehende Perforationen (4) aufweist, dadurch gekennzeichnet, daß er sich aus einem zweiten Film (5) aus nachgiebigem, transparentem, nur Infrarotstrahlen mit einer Wellenlänge von mindestens 2 µm durchlassendem Plastikmaterial zusammensetzt, welcher zweite Film (5) vor der reflektierenden Seite (1a) des Filmträgers (1) angeordnet, unabhängig von derselben und perforiert ist, und daß die Löcher (4) der Gesamtheit aus Filmträger (1) und erstem Film (2) einerseits und jene des zweiten transparenten Films (5) anderseits zur Vermeidung von Austauschvorgängen durch Konvektion zueinander versetzt sind.

2. Wärmeschild mit mindestens einem ersten Filmträger (7) aus nachgiebigem Plastikmaterial, dessen eine Seite (7a) reflektierend ist, welche Seite mit einem transparentem, nur Infrarotstrahlen mit einer Wellenlänge von mindestens 2 µm durchlassendem Film (8) bedeckt ist, welcher transparente Film (8) mit dem ersten Filmträger (7) verbunden ist, wobei die Gesamtheit der Filme (7/8) ganz durch sie durchgehende Perforierungen (10) aufweist, dadurch gekennzeichnet, daß er sich aus einem zweiten Filmträger (7₁) aus nachgiebigem Plastikmaterial zusammensetzt, dessen eine Seite (7a₁) reflektierend und mit einem transparentem, nur Infrarotstrahlen mit einer Wellenlänge von mindestens 2 µm durchlassendem Film (8₁) bedeckt ist, welcher transparente Film (8₁) mit dem zweiten Filmträger (7₁) verbunden ist, und daß der zweite Filmträger (7₁) derart über dem ersten Filmträger (7) angebracht ist, daß die reflektierenden Seiten (7a/7a₁) der beiden Filmträger entgegengesetzt und vom Schild nach außen gerichtet sind, und daß die Gesamtheit der Filme (7₁, 8₁) mit dem zweiten Filmträger ganz durch sie durchgehende Perforationen (10₁) umfaßt, und daß die Löcher (10) des ersten Filmträgers (7) und jene (10₁) des zweiten Filmträgers (7₁) zur Vermeidung von Austauschvorgängen durch Konvektion zueinander versetzt sind.

3. Schild nach einem der Ansprüche 1 oder 2, dadurch gekennzeichnet, daß die reflektierende Seite (1a/7a) metallisiert ist.

4. Schild nach Anspruch 3, dadurch gekennzeichnet, daß die reflektierende Seite (1a/7a) zur Bildung eines Schutzfilms mit einem transparenten Firnis (2/8) beschichtet ist.

5. Schild nach Anspruch 1, dadurch gekennzeichnet, daß die Gesamtheit aus Filmträger und erstem transparentem Film sowie der zweite transparente Film (5) jeweils mindestens zwei, vorzugsweise drei, Perforationen (4/6) pro Quadratmeter aufweisen.

6. Schild nach Anspruch 2, dadurch gekennzeichnet, daß die Gesamtheiten der Filme (7/8) und (7₁/8₁), gebildet aus Filmträgern und transparenten Filmen, jeweils mindestens zwei, vorzugsweise drei, Perforationen (10/10₁) pro Quadratmeter aufweisen.

7. Schild nach einem der Ansprüche 5 oder 6, dadurch gekennzeichnet, daß die Perforationen (4/6/10/10₁) kreisförmig sind und einen Durchmesser von 10 mm haben.

8. Anwendung eines Schilds nach einem der Ansprüche 1 und 3 bis 5 und 7 bei einem Glashaus zum Kultivieren von Pflanzen, dadurch gekennzeichnet, daß die reflektierende Seite (1a) des Filmträgers (1) und der zweite transparente Film (5) aus Plastikmaterial auf der Seite der Pflanzen angeordnet sind, um die von einer Wärmequelle ausgesendeten Infrarotstrahlen auf diese zu reflektieren.

9. Anwendung eines Schilds nach einem der Ansprüche 2 und 3, 4 und 6, 7 bei einem Glashaus zum Kultivieren von Pflanzen, dadurch gekennzeichnet, daß die reflektierende Seite (7a) des ersten Filmträgers (7) auf der Seite der Pflanzen Angeordnet ist, um die von einer Wärmequelle ausgesendeten Infrarotstrahlen auf diese zu reflektieren, und daß die reflektierende Seite (7a₁) des zweiten Filmträgers (7₁) auf der Seite des Gerüsts des Glashauses angeordnet ist, um die von außen kommende Strahlung von dem vom Schild bedeckten Teil nach außen zu reflektieren.

Fig. 1

Fig. 2

Fig. 3

0 080 961